# EUROPEAN PATENT APPLICATION

(11) **EP 4 472 025 A1**
(43) Date of publication of application: **04.12.2024**
(21) Application number: 23746404.5
(22) Date of filing: 28.01.2023
(51) Int. Cl.: H02J 9/06

(54) **POWER SUPPLY MANAGEMENT CIRCUIT, FUNCTION MODULE, AUTONOMOUS OPERATION DEVICE AND CONTROL SYSTEM**

(30) Priority: 28.01.2022 CN 202210106187; 28.01.2022 CN 202210106132; 28.01.2022 CN 202220238226 U
(71) Applicant: Zhejiang Sunseeker Industrial Co., Ltd., Jinhua, Zhejiang 321042 (CN)
(72) Inventor: LIU, Fangshi, Jinhua, Zhejiang 321042 (CN); CUI, Jiangwei, Jinhua, Zhejiang 321042 (CN); WANG, Zhicheng, Jinhua, Zhejiang 321042 (CN)
(74) Representative: De Ros, Alberto
(86) International application number: PCT/CN2023/073589
(87) International publication number: WO 2023/143527

(57) **Abstract**

Provided are a power supply management circuit, a function module, an autonomous operation device and a control system. The power supply management circuit comprises a switch unit (1), a first voltage reduction unit (2), a second voltage reduction unit (3) and a control unit (4), the switch unit (1) being connected to a battery (10), and the switch unit (1) being used for turning on or turning off a path between the battery and a load (20), wherein when the switch unit (1) is in a turned-on state, the power supply management circuit comprises a first state and a second state; the first voltage reduction unit (2) is connected to the switch unit (1), and the first voltage reduction unit (2) is used for converting, in the first state, the voltage of the battery (10) into a voltage required by the load (20), and supplying power to the load (20); the second voltage reduction unit (3) is respectively connected to the switch unit (1) and the control unit (4), and the second voltage reduction unit (3) is used for converting, in the second state and according to a first control instruction of the control unit (4), the voltage of the battery (10) into the voltage required by the load (20), and supplying power to the load (20). By means of the circuit, the problem of high-power loss of a power supply management circuit is solved.

## Description

### Cross-reference to related applications

The present application claims the benefit of Chinese patent application No. 2022101061878, entitled "Control Method and System of Autonomous Operation Device, Autonomous Operation Device and Medium," filed Jan. 28, 2022, No. 2022101061327, entitled "Power Supply Management Circuit, FunctionModule, Autonomous Operation Device and Control System," filed Jan. 28, 2022, and No. 2022202382265, entitled "Power Supply Management Circuit, Function Module, Autonomous Operation Device and Control System," filed Jan. 28, 2022, which are incorporated herein by reference in its entirety.

### Technical field

The embodiments of the present invention relate to the field of intelligent robot technology, particularly to a power management supply circuit, function module, autonomous operation device, and control system.

### Background

With the rapid development of advanced technology, robots have been widely applied. Existing autonomous operation robots, such as lawn mowing robots, work in external environment, which has a risk that the autonomous operation device is stolen. On the one hand, the current autonomous operation robot has a weak anti-theft ability. On the other hand, the existing autonomous operation robots have high power consumption, which affects the standby time of the anti-theft function of the autonomous operation device.

### Summary

Embodiments of the present invention provide a control method, system, autonomous operation device, and medium for autonomous operation device to solve the problem of weak anti-theft ability of autonomous operation robots and improve the anti-theft ability of autonomous operation devices.

To solve the above technical problems, an embodiment of the present invention provides a control method for autonomous operation device, comprising: obtaining motion data of a target object; obtaining the position information of the target object based on the motion data of the target object; generating a security status information of the target object based on the position information of the target object.

To solve the above technical problem, an embodiment of the present invention provides a control system for the autonomous operation device, which includes: a motion data acquisition module for acquiring motion data of the target object; a position data acquisition module, used to obtain the position information of the target object based on its motion data; Status information generation module, used to generate the security status information of the target object based on the position information of the target object.

To solve the above technical problems, an embodiment of the present invention provides an autonomous operation device, comprising a control system of the autonomous operation device.

To solve the above technical problems, an embodiment of the present invention provides a readable storage medium. When instructions in the readable storage medium are executed by the processor of the autonomous operation device, the control system of the autonomous operation device can execute the control method of the autonomous operation device.

The present invention provides a power supply management circuit, function module, autonomous operation device, and a control system to solve the problem of high power consumption of autonomous operation device and the influence on the standby time of the anti-theft function of the autonomous operation device.

To solve the above technical problems, an embodiment of the present invention provides a power supply management circuit, including: a switch unit, a first voltage reduction unit, a second voltage reduction unit and a control unit; the switch unit being connected to the battery and used to turn on or off the path between the battery and the load. When the switch unit is in a turned-on state, the power supply management circuit includes a first state and a second state; The first voltage reduction unit is connected to the switching unit, and is used to convert the voltage of the battery into the voltage required by the load in the first state and supply power to the load; The second voltage reducing unit is respectively connected to the switching unit and the control unit. The second voltage reduction unit is used to convert the voltage of the battery into the voltage required by the load according to the first control instruction of the control unit in the second state, and supply power to the load to solve the technical problem.

An embodiment of the present invention provides a function module, including the power supply management circuit described above.

To solve the technical problem, an embodiment of the present invention provides a control system for an autonomous operation device, wherein the control system of the autonomous operation device is powered by any of the power supply management circuits described in the first aspect; The control system of the autonomous operation device includes a sensor, used to obtain motion data of the autonomous operation device; a positioning unit, used to obtain the position information of the autonomous operation device based on the motion data of the autonomous operation device; a state information generation unit, used to generate security status information of the autonomous operation device based on its position information.

To solve the above technical problem, an embodiment of the present invention provides an autonomous operation device, comprising: any one of the power supply management circuit in the first aspect or the function module proposed in the second aspect, or the control system, battery, and load of the autonomous operation device proposed in the third aspect; The battery is connected to the power input interface of the power supply management circuit, and the load is connected to the first power output interface and the second power output interface of the power supply management circuit. The battery is used to supply power to the load through the power supply management circuit. The load includes the control system of the autonomous operation device.

### Description of the drawings

In order to provide a clearer explanation of the technical solution in the embodiments of the present invention, a brief introduction will be made to the accompanying drawings required for the description of the embodiments of the present invention. It is obvious that the accompanying drawings in the following description are only some of the embodiments of the present invention. For those skilled in the art, the embodiments can be used to obtain other drawings based on the content of the embodiments of the present invention and these drawings without requiring creative labor.
Figure 1 is a schematic diagram of the structure of a power supply management circuit provided by an embodiment of the present invention;
Figure 2 is a schematic diagram of the structure of another power supply management circuit provided by an embodiment of the present invention;
Figure 3 is a schematic diagram of the structure of another power supply management circuit provided by an embodiment of the present invention;
Figure 4 is a schematic diagram of the structure of another power supply management circuit provided by an embodiment of the present invention;
Figure 5 is a schematic diagram of the structure of another power supply management circuit provided by an embodiment of the present invention;
Figure 6 is a schematic diagram of the structure of another power supply management circuit provided by an embodiment of the present invention;
Figure 7 is a schematic diagram of the structure of another power supply management circuit provided by an embodiment of the present invention;
Figure 8 is a schematic diagram of the structure of another power supply management circuit provided by an embodiment of the present invention;
Figure 9 is a schematic diagram of the structure of a function module provided by an embodiment of the present invention;
Figure 10 is a schematic diagram of the structure of a control system of an autonomous operation provided by an embodiment of the present invention;
Figure 11 is a flowchart of a control method for an autonomous working device provided by an embodiment of the present invention;
Figure 12 is a flowchart of another control method for an autonomous working device provided by an embodiment of the present invention;
Figure 13 is a flowchart of another control method for an autonomous working device provided by an embodiment of the present invention;
Figure 14 is a flowchart of another control method for an autonomous working device provided by an embodiment of the present invention;
Figure 15 is a flowchart of another control method for an autonomous working device provided by an embodiment of the present invention;
Figure 16 is a flowchart of another control method for an autonomous working device provided by an embodiment of the present invention;
Figure 17 is a flowchart of another control method for an autonomous working device provided by an embodiment of the present invention;
Figure 18 is a flowchart of another control method for an autonomous operation equipment provided by an embodiment of the present invention;
Figure 19 is a flowchart of another control method for an autonomous operation equipment provided by an embodiment of the present invention;
Figure 20 is a schematic diagram of the structure of another autonomous operation equipment provided by an embodiment of the present invention;
Figure 21 is a schematic diagram of the structureof another autonomous operation equipment provided by an embodiment of the present invention;
Figure 22 is a schematic diagram of the structure of another autonomous operation equipment provided by an embodiment of the present invention;
Figure 23 is a schematic diagram of the structure of another autonomous operation equipment provided by an embodiment of the present invention.

### Detailed description

The present invention will be further described in detail with reference to the accompanying drawings and embodiments. It can be understood that the specific embodiments described here are used to explain the present invention, rather than to limit the present invention. Additionally, it should be noted that for ease of description, the accompanying drawings only show some of the structures related to the present invention, not all of them.

Based on the above technical problems, this embodiment proposes the following solutions:

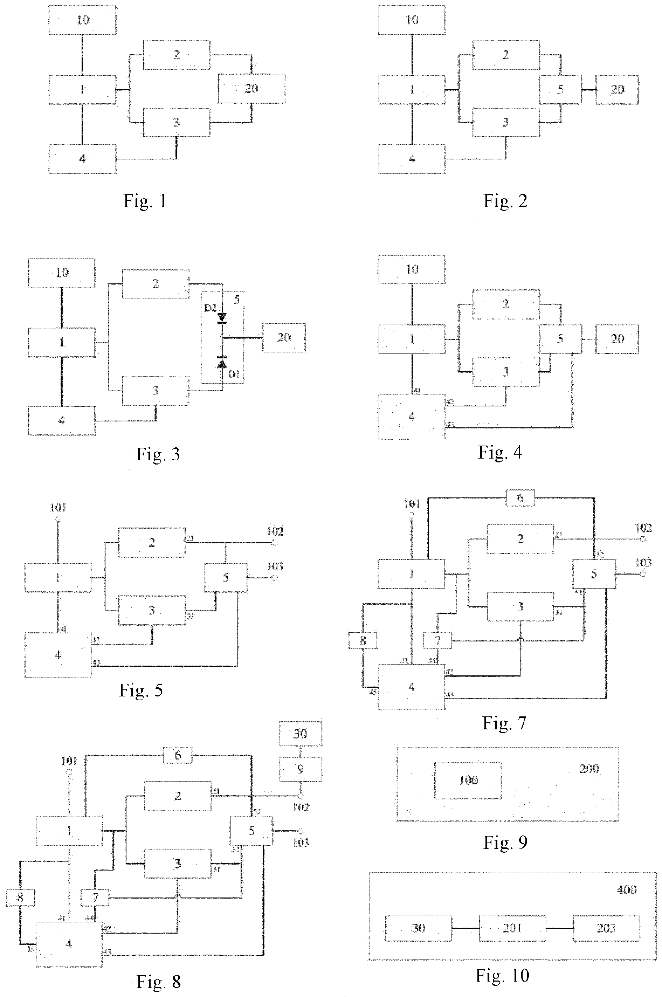

Figure 1 is a schematic diagram of the structure of a power supply management circuit provided in an embodiment of the present invention. Referring to Figure 1, the power supply management circuit provided in the embodiment of the present invention includes: a switch unit 1, a first voltage reduction unit 2, a second voltage reduction unit 3, and a control unit 4; the switch unit 1 is connected to the battery 10, and is used to turn on or turn off the path between the battery 10 and the load 20; When the switch unit 1 is turned on, the power supply management circuit includes a first state and a second state. The first voltage reduction unit 2 is connected to the switch unit 1. The first voltage reduction unit 2 is used to convert the voltage of the battery 10 into the voltage required by the load 20 in the first state and supply power to the load 20; the second voltage reduction unit 3 is connected to the switch unit1 and the control unit 4 respectively. The second voltage reduction unit 3 is used to convert the voltage of the battery 10 into the voltage required by the load 20 according to the first control instruction of the control unit 4 in the second state, and supply power to the load 20.

Specifically, the switch unit 1 can be turned on or off. When the switch unit 1 is turned off, battery 10 stops outputting electricity. When the switch unit 1 is turned on, battery 10 supplies power to the load 20 through the power supply management circuit. When the switch unit 1 is turned on, the power supply management circuit includes a first state and a second state. The first state can be set to require a smaller current, such as in a sleep or standby state; The second state requires a larger current, for example, in an activated or operating state.

The static current consumption of the first voltage reduction unit is very low, ranging from a few microamperes to over a dozen microampere levels, but the maximum output current of the first voltage reduction unit can only be within 100 milliamperes. The static current consumption of the second voltage reduction unit ranges from dozens to hundreds of microamperes, but it can drive loads of several amperes when enabled. For example, the communication unit has an instantaneous peak current of 1-2 amperes.

The first voltage reduction unit 2 will be powered on after the switch unit 1 is turned on. The voltage signal output by the first voltage reduction unit 2 has a smaller voltage amplitude, which can stably output voltage to the load 20 in the first state, making the power supply management circuit have lower power in the first state. When the control unit 4 is in the second state, a first control instruction is generated, the first control instruction can be a level signal, such as a high-level signal or a low-level signal. In the second state, the second voltage reduction unit 3 is turned on and converts the voltage of the battery 10 into the voltage required by the load 20 according to the first control instruction of the control unit 4, and supplies power to the load 20, so that the voltage output by the power supply management circuit can meet the electricity demand of the load 20 in the second state. Due to the large current and voltage amplitude required by load 20 in the second state, a larger current can be output to load 20 through the second voltage reduction unit 3, meeting the high-power electricity demand of load 20 in the second state. By setting the first voltage reduction unit 2 and the second voltage reduction unit 3, due to the weak load capacity but low static current of the first voltage reduction unit 2, and the strong load capacity but high static current of the second voltage reduction unit 3, power is supplied to the load 20 from the second voltage reduction unit 2 in the first state, with low static current and low power consumption. In the second state, power is supplied to load 20 through the second voltage reduction unit 3 to meet the power supply demand of the load.

The power supply management circuit provided in this embodiment meets its low-power requirements by setting to be in the first state, converting the voltage of the battery to the voltage required by the load through the first voltage reduction unit and supplying power to the load; In the second state, the voltage of the battery is converted into the voltage required by the load through the second voltage reduction unit according to the first control instruction of the control unit, and power is supplied to the load, which meet the high-power demand of the load, and realize low-power consumption power supply for the power supply management circuit.

Optionally, Figure 2 is a schematic diagram of the structure of another power supply management circuit provided by an embodiment of the present embodiment. On the basis of the above embodiment, referring to Figure 2, the power supply management circuit provided by the embodiment of the present invention may further include a gating unit 5. The input end of the gating unit 5 is connected to the output end of the second voltage reduction unit 3, and the output end of the gating unit 5 is connected to the output end of the first voltage reduction unit 2. The gating unit 5 is used to select the first voltage reduction unit 2 to output electrical signal in the first state, and in the second state, select the second voltage reduction unit 3 to output voltage.

Specifically, the first state can be a sleep state, for example, it is a sleep state when the autonomous operation device is in a charging or standby state. In the first state, control unit 4 is in low-power mode, retaining only basic control function while all other function modules are turned off to reduce the power consumption of the power supply management circuit and load 20. In the first state, the gating unit 5 controls the first voltage reduction unit 2to output the voltage signal to the output interface of the power supply management circuit, so as to reduce the voltage of the battery 10 to the power supply voltage through the first voltage reduction unit 2, to supply power to the load 20.

The second state can be an activated state. In the activated state, the control unit 4 is in the normal power consumption mode, and other function modules work to control the execution of each functional action. In the first state, the gating unit 5 controls the second voltage reduction unit 3 to output the voltage signal to the output interface of the power supply management circuit, in order to reduce the voltage of battery 10 to the voltage of the power supply through the second voltage reduction unit 3 and supply power to load 20. The gating unit 5 selects the first voltage reduction unit 2 or the second voltage reduction unit 3 to output electrical energy to the load 20, so that the first voltage reduction unit 2 and the second voltage reduction unit 3 can select one of them to supply power to the load 20 in the first state and the second state, respectively, in the first state, the first voltage reduction unit 2 can supply power to the load 20, and in the second state, the second voltage reduction unit 3 can supply power to the load 20. Since the first voltage reduction unit 2 has low load capacity but low static current, the second voltage reduction unit 3 has strong load capacity but high static current. In the first state, the first voltage reduction unit 2 supplies power to the load 20 with low static current and low power consumption, reducing the power loss of the power supply management circuit. In the second state, the power is supplied to the load 20 through the second voltage reduction unit 3 to meet the power supply requirement of the load.

There is an optional implementation. Figure 3 is a schematic diagram of the structure of another power supply management circuit provided by an embodiment of the present invention. On the basis of the above embodiment, referring to Figure 3, the gating unit 5 provided in the embodiment of the present invention turns on or turns off according to the voltage difference between the output end of the second voltage reduction unit 3 and the output end of the first voltage reduction unit 2, to select the first voltage reduction unit 2 to output voltage or the second voltage reduction unit 3 to output voltage.

Specifically, the gating unit 5 may include a first input diode D1 and a second input diode D2. The anode of the first input diode D 1 is connected to the output end of the second voltage reduction unit 3, the anode of the second input diode D2 is connected to the output end of the first voltage reduction unit 2, and the cathode of the second input diode D2 is connected to the cathode of the first input diode D 1, which is used as the output end connection of the gating unit 5.

When the electrical signal output from the output end of the second voltage reduction unit 3 is greater than the electrical signal output from the output end of the first voltage reduction unit 2, the first input diode D1 is turned on, and the voltage at the output end of the gating unit 5 is the electrical signal of the second voltage reduction unit 3 with a higher voltage. The output end of the gating unit 5 selects the second voltage reduction unit 3 to output the electrical signal. When the electrical signal output from the output end of the second voltage reduction unit 3 is less than or equal to the electrical signal output from the output end of the first voltage reduction unit 2, the first input diode D 1 is cut off, the second input diode D2 is turned on, and the voltage at the output end of the gating unit 5 is the electrical signal of the first voltage reduction unit 2 with a higher voltage, the output end of the gating unit 5 selects the first voltage reduction unit 2 to output the electrical signal.

As another alternative embodiment, Figure 4 is a schematic diagram of the structure of another power supply management circuit provided by an embodiment of the present invention. On the basis of the above embodiment, referring to Figure 4, the control end of the gating unit 5 provided in the embodiment of the present invention is connected to the communication control end 43 of the control unit 4; The gating unit 5 is used to select the first voltage reduction unit 2 or the second voltage reduction unit 3 to output the electrical signal according to the gating control instruction output by the control unit 4.

More specifically, the gating control instruction can be a control signal that controls the gating unit 5 to turn on or off. Control unit 4 can output gating control instructions according to the communication control end 43 of control unit 4. The gating unit 5 selects the first voltage reduction unit 2 or the second voltage reduction unit 3 to output the electrical signal according to the gating control instruction output by the control unit 4, so that the control unit 4 can select one of them to supply power to the load 20 in the first state or the second state, respectively. For example, in the first state, the first voltage reduction unit 2 can supply power to the load 20, and in the second state, the second voltage reduction unit 3 can supply power to the load 20, avoiding increasing the power loss of the first voltage reduction unit 2 and further reducing the power loss of the power supply management circuit due to the large current output to the load 20 by the first voltage reduction unit 2in the second state.

Optionally, Figure 5 is a schematic diagram of the structure of another power supply management circuit provided by an embodiment of the present invention. On the basis of the above embodiment, referring to Figure 5, the power supply management circuit provided by the embodiment of the present invention may further include: a power input interface 101, a first power output interface 102, and a second power output interface 103; the power input interface 101 is connected to the battery 10 and the input end of the switch unit 1, and the first power output interface 102 is connected to the output end of the first voltage reduction unit 2; The first power output interface 102 is used to constantly output voltage; The second power output interface 103 is connected to the output end of the gating unit 5 and the output end of the second voltage reduction unit 3; The second power output end is used to output voltage from the second voltage reduction unit 3 in the second state and output voltage from the first voltage reduction unit 2 in the first state.

Specifically, the power input interface 101 can be connected to the battery 10 to input the voltage signal of the battery 10 to the power supply management circuit. The first power output interface 102 is connected to the output end of the first voltage reduction unit 2. The first power output interface 102 can continuously output a voltage signal with a lower voltage, which is used to supply power to the load 20requiring continuous power supply in the first state. The second power output interface 103 is connected to the second voltage reduction unit 3. The second power output interface 103 outputs an electrical signal from the second voltage reduction unit 3 in the second state through the gating unit 5, and outputs an electrical signal from the first voltage reduction unit 2 in the first state. Load 20 requiring high-power operation can be connected to the second power output interface 103.

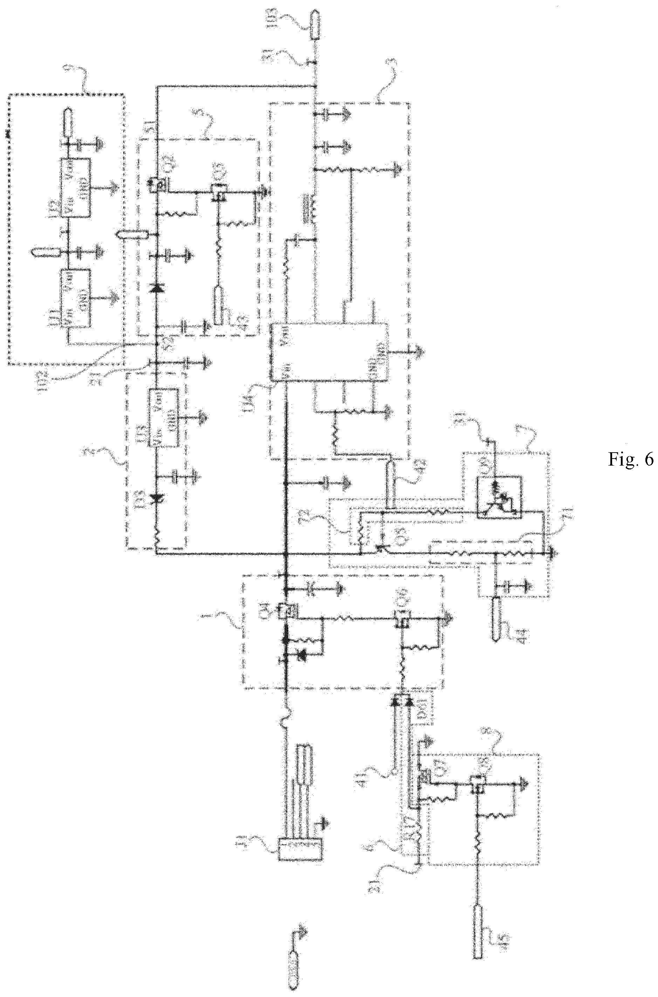

Optionally, Figure 6 is a schematic diagram of the structure of another power supply management circuit provided by an embodiment of the present invention. On the basis of the above embodiment, referring to Figure 6, the switch unit 1 provided by the embodiment of the present invention may include: a first switch Q4 and a second switch Q6; The first end of the first switch Q4 is used as the input end of the switch unit 1, the second end of the first switch Q4 is used as the output end of the switch unit 1, the control end of the first switch Q4 is connected to the first end of the second switch Q6, the second end of the second switch Q6 is grounded, and the control end of the second switch Q6 is connected to the control unit 4; The control end of the second switch Q6 is used as the control end of switch unit 1.

Specifically, the control unit 4 may include a main control module of the autonomous operation device or a controller of the power supply management circuit. The control signal output from the first output interface 41 of the control unit 4 is input to the control end of the second switch Q6 to control the first end and second end of the second switch Q6 to be turned on. The first end of the second switch Q6 outputs a low-level signal to the control end of the first switchQ6, causing the first end and second end of the first switch Q4 to be turned on. Due to the connection between battery 10 and the input end of the switch unit 1, the first end of the first switch Q4 is connected to the input end of the switch unit 1, allowing battery 10 to supply power to load 20 through the power supply management circuit.

Optionally, based on the above embodiment, referring to Figure 6, the first voltage reduction unit 2 provided by the present invention includes a stabilivolt diode D3 and an LDO chip U3. The cathode of stabilivolt diode D3 as an input end of first voltage reduction unit 2 is connected to the output end of switch unit 1. The anode of stabilivolt diode D3 is connected to the input end of LDO chip U3, and the output end of LDO chip U3 is used as the output end of the first voltage reduction unit 2. The output end of LDO chip U3 is connected to the load 20. The output end of LDO chip U3 is used to convert the voltage signal of battery 10 into the voltage required by load 20 and supply power to load 20.

Specifically, the stabilivolt diode D3 plays a stabilizing role and is used to clamp the voltage of battery 10 through the stabilivolt diode D3. For example, if the maximum input voltage of the first voltage reduction unit 2 is 30V, while the voltage of the stabilivolt diode D3 can be 12V, then if the anode input voltage of the stabilivolt diode D3 is 42V, it will not cause damage to the first voltage reduction unit 2. If the power supply management circuit loses control, the power supply management circuit will also power down when the battery voltage is lower than the voltage of the stabilivolt diode D3, without completely discharging the battery and damaging it. The LDO chip U3 plays the role of reducing voltage. For example, the output voltage of the LDO chip U3 can be 4V

Optionally, Figure 7 is a schematic diagram of the structure of another power supply management circuit provided by an embodiment of the present invention. On the basis of the above embodiment, referring to Figure 7, the power supply management circuit provided by the embodiment of the present invention may further include: a self-locking unit 6, the input end of the self-locking unit 6 is connected to the output end 21 of the first voltage reduction unit 2, and the output end of the self-locking unit 6 is connected to the control end of the switch unit 1. The self-locking unit 6 is used to control the switch unit 1 to maintain a turned-on state according to the voltage output by the first voltage reduction unit 2.

Specifically, after the switch unit 1 is turned on, the voltage reduction unit 2 is powered on, and the self-locking unit 6 is connected to the output end 21 of the first voltage reduction unit 2. The self-locking unit 6 can output the voltage output by the first voltage reduction unit 2 to the control end of the switch unit 1. The self-locking unit 6 can control the voltage output by the first voltage reduction unit Control switch unit 1 to maintain a turned-on state, so that the first power output interface 102 and the second power output interface 103 of the power supply management circuit can continually output voltage, easy to stabilize to supply power to the load 20.

Optionally, based on the above embodiment, referring to Figure 6, the self-locking unit 6 provided by the present invention embodiment includes a first resistor R17 and a first diode D61. The first end of the first resistor R17 is used as the input end of the self-locking unit 6, and the second end of the first resistor R17 is connected to the anode of the first diode D61. The cathode of the first diode D61 as the output end of the self-locking unit 6 is connected to the control end of the switch unit1.

Specifically, the first resistor R17 plays a role of limiting current, and the first diode D61 plays a role of preventing reverse connection. When the level of the control signal end 45 of control unit 4 is low, the eighth switch Q8 is not turned on, and thus the seventh switch Q7 is not turned on. At this time, the self-locking voltage passes through the first resistor R17 and the first diode D61 to the control end of the second switch Q6, thereby conducting the first and second ends of the second switch Q6, and then turning on the first switch Q4. When the control signal end 45 shows a white kill high level, the eighth switch Q8 is turned on, and then the seventh switch Q7 is turned on, thereby pulling the self-locking voltage of the output end 21 of the second voltage reduction unit 2 to the ground through the first resistor R17, and the second switch Q6 is turned off.

Optionally, based on the above embodiment, referring to Figure 6, the second voltage reduction unit 3 can include a DC-DC chip U4, the input endof the DC-DC chip U4is connected to the output end of the switch unit 1, the control end of the DC-DC chip U4 is connected to the control unit 4, and the output endof the DC-DC chip U4is connected to the load 20. The DC-DC chip U4 is used to reduce the voltage of the voltage signal of the battery 10 and supply power to the load 20 according to the DC-DC enable signal of the control unit 4.

Specifically, the DC-DC chip U4 can reduce the DC voltage signal of the battery 10, such as the DC 14~24V voltage signal, to the power supply voltage required for the load, such as the DC 3.8V.

Optionally, based on the above embodiment, referring to Figure 7, the power supply management circuit can also include: a sampling unit 7, the input end of the sampling unit 7 is connected to the output end of the switch unit 1, the output end of the sampling unit 7 is connected to the voltage sampling input end 44 of the control unit 4, and the control end of the sampling unit 7 is connected to the output end 31 of the second voltage reduction unit 3. The sampling unit 7 is used to collect the voltage amplitude of the power supply circuit of the battery 10 after passing through the switch unit 1 according to the control signal of the control end.

Specifically, when the autonomous operation device enters the second state, sampling unit 7 can collect the voltage signal at the output end of switch unit 1 according to the control signal received at its control end. When the autonomous operation device enters the first state, the output end 31 of the second voltage reduction unit 3 stops outputting voltage signals, and the control end of the sampling unit 7 stops sampling according to the voltage signal output from the output end 31 of the second voltage reduction unit 3, for example, a low-level signal is turned off. This setting can stop sampling in the first state, such as a sleep mode, further reducing the power loss of control unit 4. The sampling circuit is used to prevent battery damage caused by the battery voltage dropping below the safe voltage without shutting down, in order to improve the service life of the battery.

Optionally, based on the above embodiments and in conjunction with Figures 6 and 7, the sampling unit 7 may include: a third switch Q5 and a first resistor network 71; the first end of the third switch Q5 is used as the input end of the sampling unit 7, the second end of the third switch Q5 is connected to the first end of the first resistor network, the second end of the first resistor network is used as the control end of the switch unit 1; the third end of the first resistor network 71 is electrical grounded; a fourth switch Q9 and a second resistor network 72; the first end of the second resistor network 72 is connected to the first end of the third switch Q5, the second end of the second resistor network 72 is connected to the control end of the third switch Q5, the third end of the second resistor 72 is connected to the first end of the fourth switch Q9, the control end of the fourth switch Q9 is used as the control end of the sampling unit 7; the second end of the fourth switch Q9 is electrical grounded.

Specifically, the first resistor network 71 and the second resistor network 72 play roles of dividing voltage, respectively. When the control end of the fourth switch Q9 receives a high-level signal output from the second voltage reduction unit 3, the first end and the second end of the fourth switch Q9 are conducting, the second resistor network 72 divides the voltage signal of the battery 10, so that the voltage between the first terminal and the control terminal of the third switch Q5 is great than the turn-on voltage of the third switch Q5, to make the third switch Q5 turn on, the turning on of the third switch Q5 makes the voltage signal of the battery 10 divide via the first resistor network 71 and output to the control unit 4. When the control end of the fourth switch Q9 receives a low-level signal output from the second voltage reduction unit 3, the first end and the second end of the third switch Q5 are turned off, the loop where the second resistor network 72 locates is broken, to make the voltage between the first end and the control end of the third switch Q5 to be nearly zero, and less than the turn-on voltage of the third switch Q5, to make the third switch Q5 to be turned off. The turned off third switch Q5 makes the first resistor network 71 broke and the sampling unit 7 stop sampling.

Optionally, based on the above embodiment, in conjunction with Figures 6 and 7, the gating unit 5 may include: a fifth switch Q2 and a sixth switch Q3; the first end of the fifth switch Q2 is used as the input end of the gating unit 5, the second end of the fifth switch Q2 is used as the output end 52 of the gating unit 5, the control end of the fifth switch Q2 is connected to the first end of the sixth switch Q3, the second end of the sixth switch Q3 is grounded, the control end of the sixth switch Q3 is used as the control end of the gating unit 5.

Specifically, the control end of the sixth switch Q3 is used as the control end of the gating unit 5, which is connected to the communication control end 43 of the control unit 4. When the sixth switch Q3 outputs the electrical signal at the second voltage reduction unit 3, the sixth switch Q3 is turned on, to make the first end and the second end of the sixth switch Q3 turned on.

Since the fifth switch Q2 has a parasitic diode inside, the current can turn on the second end of the fifth switch Q2 from the first end of the fifth switch Q2through the parasitic diode, in which case the fifth switch Q2 is not turned on, while the voltage drop of the parasitic diode increases with the increase of current. If the load current is too large, such as the instantaneous current of 1.5A, its immediate voltage drop maybe more than 1V, which will cause not working properly for the insufficient load voltage. On the other hand, the parasitic diode with a voltage drop can generate significant power consumption and damage the device, thus before the load operates in normal high current, first turn on the sixth switch Q3, then turn on the fifth switch Q2, when the inside of the fifth switch Q2 is equal to parallel connection of one resistor with tens of milliohm and the parasitic diode, assuming the resistance value of the internal resistor is 50 milliohm, the load instantaneous current 1.5A, then the voltage drop is 0.075V, which can be seen that the voltage drop is very small. The instantaneous power consumption is 0.1123W, which can be seen that the power consumption very small, while the load circuit is about tens to hundreds of milliamps in most of the working time.

When the system is in low power consumption, the sixth switch Q3 is turned off, and then the fifth switch Q2 is turned off, so that the first voltage reduction unit 2 and the second voltage reduction unit 3 are turned off. The first voltage reduction unit 2 will not cause leakage of electricity through the second voltage reduction unit 3.

Optionally, based on the above embodiment, referring to Figure 7, the power supply management circuit can also include: a shutdown unit 8, the input end of the shutdown unit 8 is connected to the control signal end 45 of the control unit 4, the output end of the shutdown unit 8 is connected to the control end of the switch unit 1, and the shutdown unit 8 is used to control the switch unit 1 to be turned off according to the third control instruction of the control unit 4 to stop battery 10 to supply power to load 20.

Specifically, control unit 4 may include a main control module, shut down unit 8 can be connected to the main control module to control the switch unit 1 to be turned off according to the control signal from the main control module, further control battery 10 to stop supplying power to load 20, causing the autonomous operation device to shut down. Optionally, the power supply management circuit can also include wiring terminal J1, the first end of terminal J1 is connected to the battery, the fifth end is grounded, and the second end, the third end, the fourth end, and the fifth end are respectively connected to the control end of the main control module.

Optionally, based on the above embodiments and in conjunction with Figures 6 and 7, shutdown unit 8 can include a seventh switch Q7 and an eighth switch Q8, the first end of seventh switch Q7 is used as the output end of shutdown unit 8, the second end of the seventh switch Q7 is grounded, the control end of the seventh switch Q7 is connected to the first end of the eighth switch Q8, the second end of the eighth Q8 is grounded, and the control end of the eighth switch Q8 is used as the input end of the shutdown unit 8.

Specifically, the control end of the eighth switch Q8 of the shutdown unit 8 makes the first end and the second end of the eighth switch Q8 to be conducting according to the control signal of the control unit 4, further makes the control end of the seventh switch Q7 to input a low-level voltage, further makes the first end and second end of the seventh switch Q7 to be conducting, makes the self-locking unit 6 to input a low-level signal and exit the self-locking state. The control end of switch unit 1 inputs a low-level signal, causing switch unit 1 to turn off, thereby shutting down the power supply management circuit.

The specific working process is as follows: when the level of the control signal end 45 of the control unit 4 is low, the eighth switch Q8 is not turned on, and thus the seventh switch Q7 is not turned on. At this time, the self-locking voltage passes through the first resistor R17 and the first diode D61 to the control end of the second switch Q6, thereby the first end and the second end of the second switch Q6 are turned on, further the first switch Q4 is turned on. When the suicide high level appears at the control signal end 45, the eighth switch Q8 is turned on, and then the seventh switch Q7 is turned on, thereby pulling the self-locking voltage of the output end 21 of the first voltage reduction unit 2 to the ground through the first resistor Rl7, and thus the second switch Q6 is turned off.

Optionally, Figure 8 is a schematic diagram of the structure of another power supply management circuit provided by an embodiment of the present invention. On the basis of the above embodiments, referring to Figure 8, the power supply management circuit further comprises: a sensor power supply unit 9, the input end of the sensor power supply unit 9 is connected to the first power output interface 102, the output end of the sensor power supply unit 9 is connected to the sensor 30, and the sensor power supply unit 9 is used to reduce the voltage of the electrical signal output by the first voltage reduction unit 2 and constantly output electrical voltage to the sensor.

Specifically, referring Figure 6 and 8, the sensor power supply unit 9 plays a role of reducing the voltage, the sensor power supply unit 9 can comprise a first voltage reduction chip U1 and a second voltage reduction chip U2. The sensor can be a displacement sensor or a motion sensor etc. a sensor required to work continuously while in sleep mode. For example, low power accelerometer based on MEMS, the accelerometer has motion-activated functions, that is, when the system enters low-power sleep mode, if the machine has been moved, the accelerometer can output a signal to wake up the system, which is used for anti-theft devices. The sensor power supply unit 9 can reduce the voltage of the electrical signal output from the first voltage reduction unit 2, and output constant electrical signal to the sensor, to achieve low-power continuous power supply. Since the sensor has very low power consumption and needs constant power supply, it is placed on the first power output interface 102 of the first voltage reduction unit 2 always having output voltage and low self-power consumption.

Figure 9 is a schematic diagram of the structure of the function module provided by an embodiment of the present invention. On the basis of the above embodiments, referring to Figure 9, the function module 200 provided by the embodiment of the present invention comprises the power supply management circuit 100 provided in any above embodiments. The function module 200 provided in the embodiments of the present invention has beneficial effects of the power supply management circuit 100 provided in the embodiments of the present invention, which will not be reiterated here.

Figure 10 is a schematic diagram of the structure of a control system of an autonomous operation device provided by an embodiment of the present invention. On the basis of the above embodiments, referring to Figure 10, the control system of the autonomous operation device is powered by the power supply management circuit provided in any above embodiments, the control system of the autonomous operation device400 provided by an embodiment of the present invention comprises: sensor 30, used to obtain the motion data of the autonomous operation device; positioning unit 201, used to obtain the position information of the autonomous operation device according to the motion data of the autonomous operation device; status information generation unit 203, used to generate the security status information of the autonomous operation device according to the position information of the autonomous operation device.

The control system of the autonomous operation device provided in the embodiments of the present invention obtains the motion data of the autonomous operation device through a motion data acquisition module. The position data acquisition module obtains the position information of the autonomous operation device based on the motion data of the autonomous operation device, and generates the security status information of the autonomous operation device based on the position information of the autonomous operation device through a state information generating module. The control system of the autonomous operation device provided in the embodiments of the present invention realizes the monitoring of the motion status of the autonomous operation device, and detects the motion data based on the motion data when the autonomous operation device should not move, obtains the position information of the autonomous operation device, generates the security status information of the autonomous operation device based on the position information of the autonomous operation device, which can realize the anti-theft judgment and position tracking of the autonomous operation device based on the security status data of the autonomous operation device, thereby improving the anti-theft ability of the autonomous operation device.

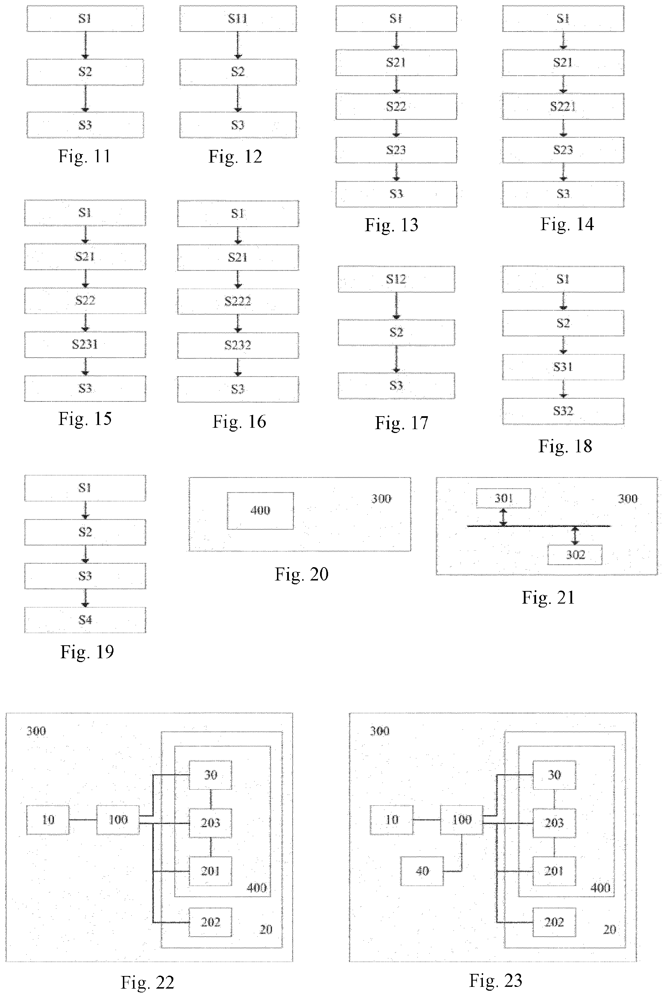

Figure 11 is a flowchart of a control method for an autonomous operation device provided by an embodiment of the present invention. Referring to Figure 11, the control method of the autonomous operation device provided in the embodiment of the present invention is executed by the control system of the autonomous operation device proposed in any of the above embodiments. The control method for autonomous operation device provided in the embodiments of the present invention includes:
S 1: Obtaining the motion data of the autonomous operation device.

Specifically, autonomous operation device can be autonomous operation device, such as robots for mowing, sweeping, mopping, or meal preparation. Motion data can include displacement data, vibration data, or motion speed of the autonomous operation device. The motion data of the autonomous operation device can be obtained through sensors. In this embodiment, the sensor is constructed as an accelerometer, preferably a MEMS linear accelerometer. In some implementations, the sensor may also be constructed as a speedometer. In some implementations, the sensor may also be constructed as a visual sensor. In some embodiments, the sensor can also be constructed as a combination of two or more of accelerometers, speedometers, and visual sensors.

S2: Obtaining the position information of the autonomous operation device according to the motion data of the autonomous operation device.

Specifically, judging the autonomous operation device moves and/or vibrates in the state that it should not move according to the motion data of the autonomous operation device and the working status of the autonomous operation device, for example, if the motion of the autonomous operation device is displacement, the autonomous operation device may be stolen; If the motion is vibration or reversal, the autonomous operation device may be damaged. The position information of the autonomous operation device can identify the geographic location information of the autonomous operation device, such as geographic coordinates and other data. According to the motion data of the autonomous operation device, obtaining the position information of the autonomous operation device, obtaining the position information of the primary operation equipment according to the requirements, such as obtaining one time position information at preset intervals. An optional implementation method is that the autonomous operation device can set to obtain motion data when in the state that movement should not occur, which triggers the acquisition of the position information of the autonomous operation device. There is no limitation here.

S3: Generating a security status information of the autonomous operation device according to the position information of the autonomous operation device.

Specifically, the security status information includes the safety of the autonomous operation device and the theft of the autonomous operation device. Based on the position information of the autonomous operation device, such as the data difference between the position information in two or more times, it is judged whether the autonomous operation device has been stolen, and the security status information of the autonomous operation device is generated.

According to the control method of the autonomous operation device provided in this embodiment, obtaining the position information of the autonomous operation device by obtaining the motion data of the autonomous operation device according to the motion data of the autonomous operation device, and generating the security status information of the autonomous operation device according to the position information of the autonomous operation device, realize the monitoring of the motion status of the autonomous operation device. According to the motion data, the motion data is detected when the autonomous operation device should not move, obtaining the position information of the autonomous operation device, generating the security status of the autonomous operation device according to the security status data of the autonomous operation device, which can realize the anti-theft judgment and position tracking of the autonomous operation device, to realize the improvement of the anti-theft ability of the autonomous operation device.

Optionally, Figure 12 is a flowchart of another control method for an autonomous operation device provided by an embodiment of the present invention. On the basis of the above embodiment, refer to Figure 12, the control method for the autonomous operation device provided by the embodiment of the present invention includes:
S 11: Obtaining the motion data of the autonomous operation device in real-time; wherein, the motion data of the autonomous operation device is collected in real-time; alternatively, periodically obtaining the motion data of the autonomous operation device.

Specifically, the motion data of the autonomous operation device is collected in real-time and can be collected by motion sensors, or the motion data can be determined by position sensors to obtain the motion status of the autonomous operation device. For obtaining motion data of autonomous operation equipment, according to an optional implementation method, obtaining the motion data of autonomous operation device in real time facilitates real-time monitoring of the security status of autonomous operation device and further enhances its anti-theft capability.

An optional implementation method is to periodically obtain motion data of autonomous operation device, which can save the working time of autonomous operation device, reduce the power consumption of autonomous operation device, extend the standby time of autonomous operation device, and improve the anti-theft capability of autonomous operation device and further improve its anti-theft capability.

S2: Obtaining the position information of the autonomous operation device according to the motion data of the autonomous operation device.

S3: Generating the security status information of the autonomous operation device according to the position information of the autonomous operation device.

Optionally, Figure 13 is a flowchart of another control method for an autonomous operation device provided by an embodiment of the present invention. Based on the above embodiment, referring to Figure 13, the control method for the autonomous operation device provided by the embodiment of the present invention includes:
S1: Obtaining motion data of the autonomous operation device.
S21: Determining that the autonomous operation device is in the first state according to the working state of the autonomous operation device.

Specifically, the working state of the autonomous operation device may include a first state and a second state, and the first state can be a state when the main control board of the autonomous operation device controls the autonomous work equipment to remain stationary, typically such as a sleep state or a charging state. The second state can be controlled by the main control board to keep the autonomous operation device in a moving state, typically such as the state when performing mowing work. Based on the working state of the autonomous operation device, it is determined that the autonomous operation devices in the first state required to maintain a stationary state.

S22: Based on the motion data of the autonomous operation device, it is determined that the autonomous operation device is in a moving state in the first state.

Specifically, if the autonomous operation device has motion data in the first state where it should not be in motion, it is determined that the autonomous operation device is in a moving state.

S23. Based on the moving state of the autonomous operation device, obtaining the current position information of the autonomous operation device.

Specifically, based on the moving state of the autonomous operation device, the autonomous operation device can obtain the position information during the duration of the moving state when it should not be in motion.

In another case, every time the motion data of the autonomous operation device is detected to be greater than the preset motion threshold, the current position information of the autonomous operation device is obtained once.

S3: Based on the position information of the autonomous operation device, generating the security status information of the autonomous operation device.

Optionally, Figure 14 is a flowchart of another control method for anautonomous operation device provided by an embodiment of the present invention. On the basis of the above embodiment, refer to Figure 14. The control method for the autonomous operation device provided by the embodiment of the present invention includes:
S1: Obtaining the motion data of the autonomous operation device.
S21: Determining that the autonomous operation device is in the first state according to the working status of the autonomous operation device.
S221: Comparing the motion data of the autonomous operation device with a preset motion threshold, and obtaining a comparison result; When the motion data is greater than the preset motion threshold, it is determined that the autonomous operation device is in a moving state.

Specifically, the motion data of the autonomous operation device is compared with the preset motion threshold to obtain the comparison result; When the motion data is greater than the preset motion threshold, it is determined that the autonomous operation device is in a moving state. This setting can avoid misjudgment caused by the motion of the non-theft autonomous operation device and further improve the anti-theft ability of the autonomous operation device.

S23: Based on the moving state of the autonomous operation device, obtaining the current position information of the autonomous operation device.

S3: Based on the position information of the autonomous operation device, generating the security status information of the autonomous operation device

Optionally, Figure 15 is a flowchart of another control method for anautonomous operation device provided by an embodiment of the present invention. Based on the above embodiments, refer to Figure 15. The control method for the autonomous operation device provided by the embodiments of the present invention includes:
S1: Obtaining the motion data of the autonomous operation device.
S21: Determining that the autonomous operation device is in the first state according to the working state of the autonomous operation device.
S22: Based on the motion data of the autonomous operation device, determining that the autonomous operation device is in a moving state in the first state.
S231: Based on the moving state of the autonomous operation device, periodically obtaining the current position information of the autonomous operation device.

Specifically, based on the moving state of the periodically equipment, the current position information of the periodically equipment is periodically obtained. On the one hand, the current position information of the autonomous operation device can be monitored periodically, which facilitates the determination of the current motion state of the autonomous operation device based on the position information at different times. On the other hand, periodically obtaining the position information of the autonomous operation device can effectively save the power consumption of the autonomous operation device, extend the anti-theft monitoring time of the autonomous operation device, and further enhance the anti-theft capability of the autonomous operation device.

S3: Based on the position information of the autonomous operation device, generating the security status information of the autonomous operation device.

Optionally, Figure 16 is a flowchart of another control method for anautonomous operation device provided by an embodiment of the present invention. On the basis of the above embodiment, refer to Figure 16. The control method for the autonomous operation device provided by the embodiment of the present invention includes:
S1: Obtaining the motion data of the autonomous operation device.
S21: Determining that the autonomous operation device is in the first state according to the working status of the autonomous operation device.
S22: Based on the motion data of the autonomous operation device, determining that the autonomous operation device is in a moving state.
S232: Obtaining the current position information of the autonomous operation device, when the autonomous operation device is in a moving state, and the motion data is greater than the preset motion threshold every time.

Specifically, when the autonomous operation device is in the first state, and the autonomous operation device is in a moving state, and the motion data is greater than the preset motion threshold every time, the current position information of the autonomous operation device is obtained once. According to presetting greater motion data, the autonomous operation device is triggered to obtain the current position information of the autonomous operation device once, which facilitates that the main control board of the autonomous operation device precisely controls the position information of the autonomous operation device. This setting can reduce the power consumption of main control board of the autonomous operation device, extend the standby time of the autonomous operation device, and further improve the anti-theft ability of the autonomous operation device.

S3: Based on the position information of the autonomous operation device, generating the security status information of the autonomous operation device

Optionally, Figure 17 is a flowchart of another control method for an autonomous operation device provided by an embodiment of the present invention. Based on the above embodiments, refer to Figure 17. The control method for the autonomous operation device provided by the embodiments of the present invention includes:
S12: Obtaining the motion data of the autonomous operation device when the autonomous operation device is in the first state.

Specifically, since the target is in the second state, that is, normal working state, such as in mowing, the autonomous operation device will move or vibrate, and when the autonomous operation device is in the normal working state, due to the inconvenient portability of moving or vibration, the theft of the autonomous operation device usually occurs in the first state, that is, sleeping state or charging state. Thus, it is easy to judge if the autonomous operation device is in motion based on the motion data of the autonomous operation device by obtaining the motion data of the autonomous operation device when the autonomous operation device is in the first state, further facilitating the judgment whether or not the autonomous operation device is stolen. This setting can further reduce the power consumption of the autonomous operation device, and improve the anti-theft capability of the autonomous operation device.

S2: Obtaining the position information of the autonomous operation device according to the motion data of the autonomous operation device.

S3: Generating the security status information of the autonomous operation device according to the position information of the autonomous operation device.

Optionally, Figure 18 is a flowchart of another control method for an autonomous operation device provided by an embodiment of the present invention. Based on the above embodiment, referring to Figure 18, the control method for the autonomous operation device provided by the embodiment of the present invention includes:
S1: Obtaining the motion data of the autonomous operation device.
S2: Based on the moving state of the autonomous operation device, obtaining the position information of the autonomous operation device.
S31: Comparing the position information of the autonomous operation device with the position data of the preset area, to obtain the comparison result.

Specifically, based on the position information of the autonomous operation device, directly determine whether the autonomous operation device has crossed the boundary, if the position data of the autonomous operation device is compared with the preset area, determining that the position data of the autonomous operation device is within the preset area, the position data of the autonomous operation device is on the boundary of the preset area or the position data of the autonomous operation device is outside the preset area.

S32: Based on the comparison result, generating the security status information of the autonomous operation device.

Specifically, if the position data of the autonomous operation device is outside the preset area, it is determined that the autonomous operation device has been stolen and a theft status information is generated. If the position of the autonomous operation device is not outside the preset area, it is determined that the autonomous operation device is safe and an optional security status signal is generated.

Optionally, Figure 19 is a flowchart of another control method for an autonomous operation device provided by the embodiment of the present invention. Based on the above embodiment, refer to Figure 19. The control method for the autonomous operation device provided by the embodiment of the present invention includes:
S1: Obtaining the motion data ofthe autonomous operation device.
S2: Obtaining the position information of the autonomous operation device based on the motion data of the autonomous operation device.
S3: Generating the security status signal of the autonomous operation device based on the position information of the autonomous operation device.
S4: When the position information of the autonomous operation device exceeds the position data of the preset area, determining the security status information as that the autonomous operation device crosses the border, and sending the security status information of the autonomous operation device and/or the position information to the terminals.

Specifically, terminals can include mobile phone, computers, wearable devices and mobile terminals, when the position information of the autonomous operation device exceeds the position data of the preset area, determining the security status information as that the autonomous operation device crosses the border, and sending the security status information of the autonomous operation device to the terminals, facilitates timely warning of autonomous operation device crossing borders.

When the position information of the autonomous operation device exceeds the position data of the preset area, determining the security status information as that the autonomous operation device crosses the border, and sending the position information of the autonomous operation device to the terminals, facilitates timely tracking and retrieving the autonomous operation device, further improve the anti-theft capability of the autonomous operation device.

Figure 20 is a schematic diagram of the structure of another autonomous operation device provided by an embodiment of the present invention. On the basis of the above embodiments, referring to Figure 20, the autonomous operation equipment 300 provided by the embodiments of the present invention includes a control system 400 for the autonomous operation device proposed in any of the above embodiments. The autonomous operation device 300 provided by the embodiments of the present invention has the beneficial effects of the control system 400 of the autonomous operation device proposed in any of the above embodiments, which will not be repeated here.

Figure 21 is a schematic diagram of the structure of another autonomous operation device provided by an embodiment of the present invention. On the basis of the above embodiments, referring to Figure 21, the present invention provides a readable storage medium 302. When the instructions in the readable storage medium 302 are executed by the processor 301 of the autonomous operation device 300, the control system of the autonomous working device can execute the control method of the autonomous operation device proposed in any of the above embodiments. The method includes: obtaining motion data of the autonomous operation device; Based on the motion data of the autonomous operation device, obtaining the position information of the autonomous operation device; Based on the position information of the autonomous operation device, generating the security status information of the autonomous operation device.

Of course, the embodiment of the present invention provides a storage medium containing computer executable instruction. The computer executable instruction is not limited to be operated by the control method of the autonomous operation device as described above, but can also perform relevant operations in the control method of the autonomous operation equipment provided in any embodiment of the present invention, and have corresponding function and beneficial effect.

Through the description of the implementation mode above, technical persons skilled in the art can clearly understand that the present invention can be implemented with software and necessary general hardware, of course, it can also be implemented through hardware, but in many cases, the former is the better implementation mode. Based on this understanding, the technical solution of the present invention, in essence, or the part that contribute to the existing technology, can be embodied in the form of a software product. The software product can be stored in a readable storage medium, such as a computer's floppy disk, read-only memory (ROM), random access memory (RAM), flash memory (FLASH), hard disk or optical disk, etc., including several instructions for a computer device (which can be a personal computer, server, or network device, etc.) to execute the control method of the autonomous operation device of various embodiments of the present invention.

Optionally, Figure 22 is a schematic diagram of the structure of another autonomous operation device provided by an embodiment of the present invention. On the basis of the above embodiments, referring to Figure 22, the autonomous operation device300provided in the present invention comprises: the power supply management circuit 100 provided in any of the above embodiments or the function module 200 provided in any of the above embodiments, or the control system 400 of the autonomous operation device provided in any of the above embodiments, battery 10 and load 20; the battery 10 is connected to the power input interface 101 of the power supply management circuit 100, the load 20 is connected to the first power output interface 102 and the second power output interface 103 of the power supply management circuit 100, the battery 10 is used to supply power through the power supply management circuit 100; the load 20 can include the control system 400 of the autonomous operation device.

Specifically, according to the power supply demand of the load 20, the first power output interface 102 and/or the second power output interface 103 can be selected to supply power to the load 20 with different types. For example, the load 20 requiring high-power operation can be powered by the first power output interface 102.

Optionally, based on the above embodiment, referring to Figure 22, the control system 400 of the autonomous operation device includes a positioning unit 201, a sensor 30, and a status information generation unit 203. The load also includes a communication unit 202. The positioning unit 201, the sensor 30, and the communication unit 202 are respectively connected to the power supply management circuit 100. The communication unit 202 is used to communicate with the service terminal; The first power output interface 102 is connected to the sensor 30, and the first power output interface 102 is used to constantly output electrical signals to supply power to the sensor; Sensor 30 is used to obtain motion data of the autonomous operation device 300; The second power output interface 103 is connected to the status information generation unit 203, the positioning unit 201, and the communication unit 202; The second power output interface 103 is used to supply power to the status information generation unit 203, the positioning unit 201, and the communication unit 202; The positioning unit 201 is used to collect position information of the autonomous operation device 300; The status information generation unit 203 is used to generate security status information for the autonomous operation device 300 based on the motion data and position information of the autonomous operation device 300when the autonomous operation device 300 is in the first state.

Optionally, Figure 23 is a schematic diagram of the structure of another autonomous operation device 300 provided by an embodiment of the present invention. On the basis of the above embodiments, combined with Figures 6 and 23, the autonomous operation device 300 provided by the present embodiment may further include a main control module 40, which is connected to the power supply management circuit 100 and used to control the power supply management circuit 100 to be initial power on. Referring to Figure 6, the power supply management circuit 100 is a separate module that requires an external power source to be activated before use. The first output interface 41 of the control unit 4 is connected to an external power source, which turns on the first end and second end of the second switch Q6 through a diode; when the external power supply is cut off, the power supply management circuit 100 can be self-sustaining locking and perform power management.

Note that the above are only the preferred embodiments and technical principles of the present invention. Those skilled in the art will understand that the present invention is not limited to the specific embodiments described herein, and various obvious changes, readjustments, and substitutions can be made for those skilled in the art without departing from the scope of protection of the present invention. Therefore, although the present invention has been described in detail through the above embodiments, the present invention is not limited to the above embodiments, and may also include more equivalent embodiments without departing from the inventive concept. The scope of the present invention is determined by the scope of the appended claims.

## Claims

1. A power supply management circuit comprising:
a switch unit connected to a battery and used to turn on or turn off path between the battery and a load, wherein when the switch unit is turned on, the power supply management circuit comprises a first state and a second state,
a first voltage reduction unit connected to the switch unit and used to convert voltage of the battery into voltage required by the load in the first state and supply power to the load,
a second voltage reduction unit, and
a control unit, wherein the second voltage reduction unit is connected to the switch unit and the control unit respectively and is used to convert the voltage of the battery into the voltage required by the load in the second state according to a first control instruction of the control unit and supply power to the load.

2. The power supply management circuit of claim 1, further comprising a gating unit, wherein an input end of the gating unit is connected to an output end of the second voltage reduction unit, an output end of the gating unit is connected to an output end of the first voltage reduction unit, and the gating unit is used to select the first voltage reduction unit to output an electrical signal in the first state and select the second voltage reduction unit to output a voltage in the second state.

3. The power supply management circuit of claim 2, wherein the gating unit is turned on or off according to a voltage difference between the output end of the second voltage reduction unit and the output end of the first voltage reduction unit, so as to select the first voltage reduction unit to output voltage or the second voltage reduction unit to output voltage.

4. The power supply management circuit of claim 2, wherein a control end of the gating unit is connected to the communication control end of the control unit and the gating unit is used to select the first voltage reduction unit to output voltage or the second voltage reduction unit to output voltage according to a gating control instruction output by the control unit.

5. The power supply management circuit of claim 2, further comprising:
a power input interface connected to the battery and an input end of the switch unit,
a first power output interface connected to the output end of the first voltage reduction unit and used to constantly output voltage, and
a second power output interface connected to the output end of the gating unit and the output end of the second voltage reduction unit, wherein the second power output end is used to output voltage from the second voltage reduction unit in the second state and output voltage from the first voltage reduction unit in the first state.

6. The power supply management circuit of claim 1, wherein the switch unit comprises:
a first switch, wherein a first end of the first switch is used as an input end of the switch unit and a second end of the first switch is used as an output end of the switch unit, and
a second switch, wherein a control end of the first switch is connected to a first end of the second switch and a second end of the second switch is grounded, and a control end of the second switch is connected to the control unit and used as a control end of the switch unit.

7. The power supply management circuit of claim 1, wherein the first voltage reduction unit comprises a stabilivolt diode and an LDO chip,
wherein a cathode of the stabilivolt diode as an input end of first voltage reduction unit is connected to an output end of the switch unit and an anode of the stabilivolt diode is connected to an input end of the LDO chip, and an output end of the LDO chip is used as an output end of the first voltage reduction unit,
wherein the output end of LDO chip is connected to the load and the output end of the LDO chip is used to convert the voltage of battery into the voltage required by the load and supply power to the load.

8. The power supply management circuit of claim 7, further comprising a self-locking unit, wherein an input end of the self-locking unit is connected to the output end of the first voltage reduction unit and an output end of the self-locking unit is connected to a control end of the switch unit, wherein the self-locking unit is used to control the switch unit to maintain a conducting state according to the voltage output by the first voltage reduction unit.

9. The power supply management circuit of claim 8, wherein the self-locking unit comprises a first resistor and a first diode, wherein a first end of the first resistor is used as the input end of the self-locking unit and a second end of the first resistor is connected to an anode of the first diode, wherein a cathode of the first diode as the output end of the self-locking unit is connected to the control end of the switch unit.

10. The power supply management circuit of claim 1, wherein the second voltage reduction unit comprises DC-DC chip, wherein an input end of the DC-DC chip is connected to an output end of the switch unit, a control end of the DC-DC chip is connected to the control unit, and an output end of the DC-DC chip is connected to the load, and
the DC-DC chip is used to reduce the voltage of the voltage signal of the battery and supply power to the load according to the DC-DC enable signal of the control unit.

11. The power supply management circuit of claim 1, further comprising a sampling unit, wherein an input end of the sampling unit is connected to an output end of the switch unit, an output end of the sampling unit is connected to a voltage sampling input end of the control unit, a control end of the sampling unit is connected to an output end of the second voltage reduction unit, and the sampling unit is used to collect the voltage amplitude of the power supply circuit of the battery after passing through the switch unit according to a control signal of the control end.

12. The power supply management circuit of claim 11, the sampling unit comprising:
a third switching and a first resistor network, wherein a first end of the third switching is used as the input end of the sampling unit, a second end of the third switch is connected to a first end of the first resistor network, a second end of the first resistor network is used as a control end of the switch unit, and a third end of the first resistor network is electrical grounded, and
a fourth switch and a second resistor network, wherein a first end of the second resistor network is connected to the first end of the third switch, a second end of the second resistor network is connected to a control end of the third switch, a third end of the second resistor is connected to a first end of the fourth switch, a control end of the fourth switch is used as the control end of the sampling unit, and a second end of the fourth switch is electrical grounded.

13. The power supply management circuit of claim 4, the gating unit comprising a fifth switch and a sixth switch,
wherein a first end of the fifth switch is used as the input end of the gating unit, a second end of the fifth switch is used as the output end of the gating unit, a control end of the fifth switch is connected to a first end of the sixth switch, a second end of the sixth switch is electrical grounded, and a control end of the sixth switch is used as the control end of the gating unit.

14. The power supply management circuit of claim 1, further comprising a shutdown unit, wherein an input end of the shutdown unit is connected to a control signal end of the control unit, an output end of the shutdown unit is connected to a control end of the switch unit, and the shutdown unit is used to control the switch unit to be turned off according to a third control instruction of the control unit to stop the battery to supply power to the load.

15. The power supply management circuit of claim 14, the shutdown unit comprising a seventh switch and an eighth switch, wherein a first end of the seventh switch is used as the output end of the shutdown unit, a second end of the seventh switch is grounded, a control end of the seventh switch is connected to a first end of the eighth switch, a second end of the eighth switch is grounded, and a control end of the eighth switch is used as the input end of the shutdown unit.

16. The power supply management circuit of claim 5, further comprising a sensor power supply unit, wherein an input end of the sensor power supply unit is connected to the first power output interface, an output end of the sensor power supply unit is connected to a sensor, and the sensor power supply unit is used to reduce the voltage of the electrical signal output by the first voltage reduction unit and constantly output constant electrical signals to the sensor.

17. A function module, comprising the power supply management circuit of any one of claims 1-16.

18. A control system of an autonomous operation device being powered by the power supply management circuit of any one of claims 1-16, comprising:
a sensor used to obtain motion data of the autonomous operation device,
a positioning unit used to obtain a position information of the autonomous operation device according to the motion data of the autonomous operation device, and
a status information generation unit used to generate the security status information of the autonomous operation device according to the position information of the autonomous operation device.

19. An autonomous operation device comprising the power supply management circuit according to any one of claims 1-16 or the function module of claim 17 or the control system of the autonomous operation device of claim 18, a battery and a load,
the battery is connected to the power input interface of the power management circuit, and the load is connected to the first power output interface and second power output interface of the power management circuit, and the battery is used to supply power to the load through the power management circuit, and
the load comprises the control system of the autonomous operating equipment.

20. The autonomous operation device of claim 19, the control system of the autonomous operation device comprising a positioning unit, a sensor and status information generation unit, the load further comprising a communication unit, wherein the positioning unit, the sensors and the communication unit is connected to the power supply management circuit respectively, and the communication unit is used to communicate with a service terminal,
wherein the first power output interface is connected to the sensor, the first power output interface is used to constantly output voltage to supply power to the sensor, the sensor is used to obtain motion data of the autonomous operation device, and the second power output interface is connected to and used to supply power to the status information generation unit, the positioning unit and the communication unit, wherein the positioning unit is used to collect position information of the autonomous operation device and the status information generation unit is used to generate security status information for the autonomous operation device based on the motion data and position information of the autonomous operation device when the autonomous operation device is in the first state.

21. The autonomous operation device of claim 20, further comprising a main control module, wherein the main control module is connected to the power supply management circuit and is used to control the power supply management circuit to be initial power on.
